# FASCICULE DE BREVET EUROPEEN

(11) **EP 3 894 746 B1**
(45) Date de publication et mention de la délivrance du brevet: **06.09.2023**
(21) Numéro de dépôt: 19817719.8
(22) Date de dépôt: 12.12.2019
(51) Int. Cl.: F23D 14/32, F23N 1/02, F24D 3/00, F23L 7/00, F24D 18/00

(54) **ENSEMBLE COMPRENANT UNE INSTALLATION À COMBUSTION ET UN SYSTÈME D'OPTIMISATION ÉNERGÉTIQUE ET ENVIRONNEMENTALE**
ANORDNUNG MIT EINER VERBRENNUNGSANLAGE UND EINEM ENERGIE- UND UMWELTOPTIMIERUNGSSYSTEM
ASSEMBLY COMPRISING A COMBUSTION FACILITY AND AN ENERGY AND ENVIRONMENTAL OPTIMIZATION SYSTEM

(30) Priorité: 12.12.2018 FR 1872780
(43) Date de publication de la demande: 20.10.2021
(73) Titulaire: Bulane, 34690 Fabregues (FR)
(72) Inventeur: JEREZ, Nicolas, 34970 Lattes (FR); CHAMPSEIX, Henri, 34980 Montferriez sur Lez (FR)
(74) Mandataire: Regimbeau
(86) Numéro de dépôt international: PCT/EP2019/084954
(87) Numéro de publication internationale: WO 2020/120699

(56) Documents cités:
- EP-A1- 2 529 445
- WO-A1-2017/196174
- DE-A1- 10 032 528

## Description

### DOMAINE TECHNIQUE GENERAL ET ART ANTERIEUR

La présente invention se rapporte à un ensemble comprenant un système d'optimisation énergétique et environnementale et une installation comportant au moins un appareil à combustion à brûleur.

On sait de façon générale qu'il est souhaitable de pouvoir améliorer le rendement énergétique et la durée de vie des équipements à brûleurs (chaudières, fours, etc...), notamment de ceux d'habitations individuelles ou d'habitations collectives ou encore d'entreprises.

En particulier, les appareils à combustion ont des rendements limités car ils utilisent principalement de l'air comme comburant/oxydant, comportant seulement une faible part de dioxygène et le reste étant majoritairement de l'azote.

En outre, on souhaite pouvoir fortement diminuer les émissions de gaz à effets de serre ou autres polluants comme par exemple le CO2, le CO ou encore les oxydes d'azote (NOx) polluants et toxiques générés par ces équipements existants qui consomment de l'air comme comburant/oxydant.

On souhaite aussi diminuer la dépendance et la consommation de combustibles fossiles utilisés pour le fonctionnement de ces équipements.

L'énergie consommée dans les bâtiments est en effet une source importante d'émission de CO2 et l'amélioration du rendement des appareils à combustion est un levier identifié comme susceptible d'avoir un impact important sur l'émission des gaz à effet de serre.

Une autre voie importante pour lutter contre les émissions polluantes est l'utilisation d'énergies renouvelables, notamment sous forme d'électricité, telles que par exemple les énergies solaires ou éoliennes.

Leurs applications, notamment à des habitations, est aujourd'hui limitée dans la mesure où la production d'énergie électrique qu'elles permettent est souvent désynchronisée par rapport à la demande de consommation.

Une solution qui commence aujourd'hui à être mis en oeuvre est le « Power To Gas » (selon la terminologie anglosaxonne habituelle). L'électricité principalement issue de ces énergies renouvelables est transformée en hydrogène par électrolyse de l'eau. Ainsi converties, ces énergies peuvent être stockées et transportées par les réseaux actuels comme par exemple les réseaux de type gaz de ville.

Les solutions « Power to Gas » restent néanmoins aujourd'hui peu déployées. Notamment, les réseaux urbains souterrains actuels type gaz de ville ne sont pas toujours adaptés à un transport, notamment d'hydrogène, combiné ou non au gaz de ville, sous forme comprimé.

En outre, les appareils à combustion non raccordés aux réseaux de type gaz de ville ne peuvent pas bénéficier de ces solutions « Power to Gas ». Ces appareils à combustion sont en revanche raccordés aux réseaux de type électrique, et parfois même à une installation locale de production d'électricité.

Par ailleurs, la production d'hydrogène par électrolyse s'accompagne d'une production d'oxygène qui n'est pas récupérée. Ceci correspond à la perte d'une partie importante des gaz produits lors de l'opération d'électrolyse.

Enfin, une partie importante de l'énergie électrique utile à l'électrolyse est perdue sous forme de génération de chaleur perdue (effet joule) et non récupérée, ce qui limite le rendement global de cette opération.

Le document WO 2017/196174 A1 montre les caractéristiques spécifiées dans le préambule de la revendication 1.

Ainsi, il existe un besoin général pour une solution permettant d'utiliser localement la génération et le stockage d'hydrogène et/ou d'oxygène, sans transport dans les réseaux de gaz de ville, avec une récupération d'oxygène ainsi que de la chaleur produite lors de l'électrolyse. Cette solution permettant l'optimisation énergétique et environnementale d'une installation comprenant un appareil à combustion comprenant un brûleur.

### PRESENTATION GENERALE DE L'INVENTION

Un but général de l'invention est de palier les inconvénients de l'art antérieur.

A cet effet, l'invention propose d'hybrider tous types d'appareils à combustion connectés ou non au réseau de type gaz de ville, comportant au moins un brûleur dont notamment les appareils à combustion d'habitations individuelles ou collectives, d'entreprises, avec des électrolyseurs locaux situés proches de ces appareils à combustion. L'invention permet avantageusement d'utiliser une source d'électricité, renouvelable ou non, pour générer une chaleur décarbonée dans les appareils de combustion utilisant initialement des combustibles fossiles carbonés.

Ces électrolyseurs locaux sont branchés sur les entrées de combustible et/ou d'oxydant de ces appareils à combustion.

Ils permettent d'y injecter l'hydrogène et/ou l'oxygène générés localement - sous forme individuelle ou mélangée - afin, entre autres, de neutraliser tout ou partie de la génération des gaz polluants et toxiques comme par exemple les NOx, le CO2 ou encore le CO.

Grâce à cette injection d'hydrogène et/ou d'oxygène, la combustion réalisée et le rendement des appareils à combustion sont nettement améliorés, en particulier du fait de l'apport calorifique et énergétique de ces gaz fournis par l'électrolyseur. En outre, la combustion réalisée est plus propre, avec moins d'encrassement (génération de particules...) ce qui rend également les appareils à combustion plus durables et limite leur maintenance.

Par ailleurs, ces électrolyseurs permettent de réduire le coût du combustible fossile initial qui ne cesse d'augmenter du fait de la tension des marchés mondiaux sur les ressources énergétiques.

La répartition de l'injection de l'hydrogène et/ou de l'oxygène dans l'appareil à combustion est commandé par un module électronique situé sur l'installation qui peut être raccordé à l'appareil à combustion, au dispositif de production d'hydrogène et/ou d'oxygène ainsi qu'à des capteurs.

Celui-ci peut, en outre, comporter un boitier communiquant qui échange avec un serveur à distance pour lui transmettre régulièrement ou sur demande différents paramètres de fonctionnement de l'installation.

Ce serveur capitalise par conséquent les comportements de fonctionnement d'une multitude d'installations comportant des appareils à combustion.

Ce serveur à distance peut en outre échanger avec les modules de contrôle locaux pour leur transmettre de son côté des informations modifiant leur programmation de la répartition de l'injection des gaz.

Selon l'invention, afin d'améliorer le rendement de l'installation, l'énergie calorifique dégagée par l'électrolyseur lors de la génération d'hydrogène et/ou d'oxygène est elle-même utilisée pour préchauffer l'eau circulant dans l'appareil de combustion (récupération de la chaleur perdue par la réalisation d'une cogénération) au moyen d'un échangeur thermique.

Cette énergie calorifique peut également être utilisée pour alimenter des circuits secondaires (chauffe-eau pour l'eau chaude sanitaire par exemple).

Le dihydrogène en surplus peut lui-même être stocké localement afin d'être utilisé ultérieurement, de façon désynchronisée, pour alimenter l'appareil à combustion de l'installation ou converti en énergie électrique sur site au moyen d'une pile à combustible.

L'électrolyseur peut aussi être alimenté par une source d'alimentation électrique à énergie renouvelable (solaire (panneaux photovoltaïques), éolien, hydraulique, ou tout générateur « vert » d'électricité.

Notamment, cette source à énergie renouvelable peut être utilisée pour générer de l'hydrogène et/ou de l'oxygène, lorsque l'appareil à combustion n'est pas en fonctionnement. L'hydrogène et/ou l'oxygène ainsi produit sont alors stockés.

De façon générale, un tel système local permet un rendement général très fortement amélioré, du fait de la production d'hydrogène, de la production et de la récupération de l'oxygène, et du fait de la récupération de l'énergie thermique générée lors de la réaction d'électrolyse.

On évite en outre les transports de gaz et les pertes énergétiques par effet Joule.

Ainsi, selon un aspect, l'invention propose un ensemble selon la revendication 1.

Selon un autre aspect, il est proposé un ensemble selon la revendication 2.

Avantageusement, le système d'injection comporte des composants fluidiques permettant de piloter, suivant différents modes, l'injection des gaz hydrogène et/ou oxygène sur l'entrée de combustible du brûleur de l'appareil à combustion et/ou sur l'entrée d'oxydant du brûleur de l'appareil à combustion.

Notamment, le module électronique est adapté pour commander les différents modes d'injection afin de permettre d'injecter la totalité ou une partie des gaz hydrogène et/ou oxygène sur l'entrée de combustible du brûleur de l'appareil à combustion et/ou la totalité ou une partie des gaz hydrogène et/ou oxygène sur l'entrée d'oxydant du bruleur l'appareil à combustion.

Selon une variante de réalisation, en outre, le système d'injection est adapté pour que le mélange des gaz hydrogène et/ou oxygène avec un fluide combustible ou un fluide oxydant soit réalisé à l'intérieur dudit système, avant injection sur au moins une entrée combustible et/ou oxydant de l'appareil à combustion.

Également, le module électronique peut comprendre au moins un module de télécommunication permettant la transmission à un serveur distant des données de l'appareil à combustion et/ou du dispositif de production d'hydrogène et/ou d'oxygène et/ou des capteurs de l'installation.

En outre l'ensemble peut comporter un serveur distant qui mémorise et traite les données de fonctionnement reçues d'un ou plusieurs module(s) électronique(s) pour générer, par exemple, des informations de maintenance.

Dans une variante de mise en oeuvre possible, le dispositif de production d'hydrogène et/ou d'oxygène par électrolyse de l'eau est couplé à une source d'alimentation électrique à énergie renouvelable.

En variante ou en complément, l'ensemble comporte en outre un système de stockage local apte à stocker tout ou partie de l'hydrogène et/ou de l'oxygène générés en surplus par le dispositif de production par électrolyse de l'eau, le module électronique étant apte à piloter le système d'injection afin d'alimenter ultérieurement, de façon désynchronisée à la production d'hydrogène et/ou d'oxygène, l'appareil à combustion avec l'hydrogène et/ou l'oxygène ainsi stockés.

L'ensemblepeut en outre comporter une pile à combustible recevant en entrée de l'hydrogène stocké dans ledit système de stockage et convertissant l'hydrogène en énergie électrique.

### PRESENTATION DES FIGURES ET DESCRIPTION

La description qui suit est purement illustrative et non limitative. Elle doit être lue en regard des dessins annexés sur lesquels :
La figure 1 illustre un circuit de chaudière intégrant un électrolyseur conformément à un mode de réalisation possible de l'invention, et plus généralement un ensemble (référencé par 10) comportant au moins un appareil à combustion à brûleur(s) et au moins un système d'optimisation énergétique et environnementale ;
La figure 2 illustre schématiquement le brûleur d'une telle chaudière et ses différents modes d'admission ;
La figure 3 illustre une installation comportant au moins un système d'optimisation énergétique et environnementale dans lequel l'électrolyseur et/ou le système d'injection sont intégrés à l'appareil à combustion.

### DESCRIPTION D'UN OU PLUSIEURS MODES DE REALISATION

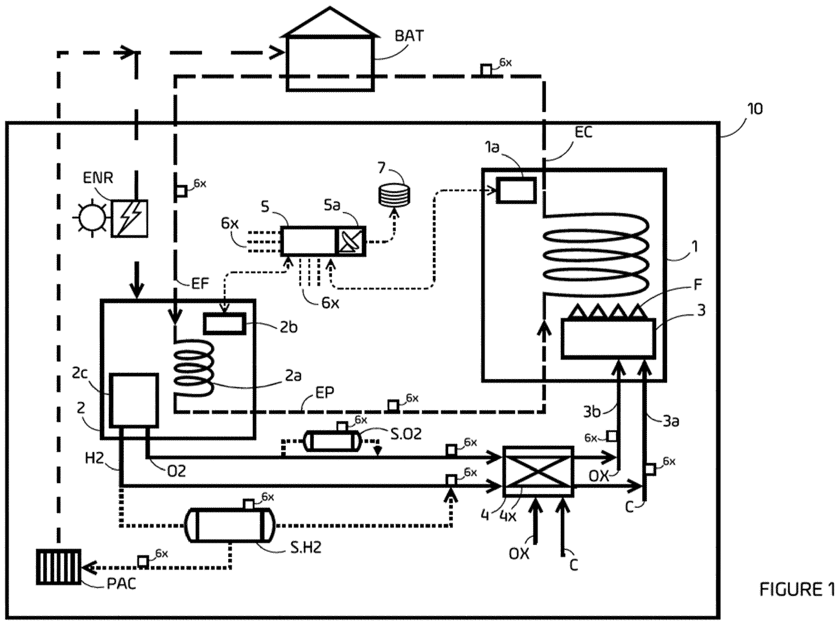

L'installation illustrée sur la figure 1 comporte un appareil à combustion 1 et un électrolyseur 2.

L'appareil 1 comporte un brûleur 3 et peut être de tout type : chaudière, fours, etc... L'installation dont il fait partie peut équiper un bâtiment BAT, comme par exemple une habitation individuelle. En variante, l'installation peut être prévue pour une habitation collective ou encore pour un bâtiment d'entreprise.

Dans l'exemple de la figure 1, l'appareil à combustion 1 est en l'occurrence une chaudière individuelle à combustible C fossile liquide ou gazeux : fioul domestique, propane, butane, gaz de ville etc..., et dont l'oxydant OX comburant est de l'air. Elle assure le chauffage central d'une habitation BAT, le chauffage d'un circuit d'eau chaude principal ou encore celui d'un circuit secondaire.

Son brûleur 3 chauffe un fluide caloporteur ou un circuit d'eau chaude EC-EF-EP. L'électrolyseur 2 peut utiliser plusieurs types de technologies d'électrolyse comme par exemple le type Alcalin ou PEM (Proton Exchange Membrane).

Il peut avantageusement être intégré à l'appareil à combustion 1, afin de simplifier l'interfaçage électronique et/ou mécanique entre ledit appareil 1 et ledit électrolyseur 2. En variante, il peut être à l'extérieur de l'appareil à combustion 1, mais sur le même site que celui-ci, au plus près dudit appareil 1 en vue de son hybridation avec ce dernier.

Sa puissance est dimensionnée en regard de l'appareil à combustion 1 dont il doit optimiser le rendement et la combustion. Par exemple, pour un usage domestique individuel, la puissance de l'électrolyseur peut être située entre 200 et 3000W. Afin de générer l'hydrogène H2 et l'oxygène 02, il est alimenté, en continu ou non, avec une eau du réseau, l'eau de pluie, ou encore une eau filtrée et/ou purifiée (déminéralisée, osmosée, distillée...).

Afin d'optimiser au maximum le rendement énergétique de l'installation et en particulier de l'électrolyseur 2, l'eau froide EF du retour du circuit de chauffage peut être admise dans l'échangeur 2a permettant d'une part de récupérer la chaleur générée lors de l'opération d'électrolyse et également le refroidissement de l'électrolyseur 2 pour son fonctionnement optimal.

Cette eau est préchauffée EP au moyen de l'échangeur thermique 2a, qui peut être situé à l'intérieur ou en sortie de l'électrolyseur 2, par la réaction thermique qui s'y produit. Il peut être intégré ou non à la cellule d'électrolyse 2c.

Cet échangeur 2a est par exemple un échangeur thermique de type Liquide/Liquide ou Air/Liquide.

L'eau préchauffée EP provenant de l'échangeur 2a de l'électrolyseur 2 est ensuite envoyée sur la chaudière 1 pour y être chauffée (circuit d'eau chaude EC). Elle peut également être utilisée pour alimenter des circuits secondaires (chauffe-eau pour l'eau chaude sanitaire par exemple).

Il est avantageux d'incorporer directement l'électrolyseur 2 à l'intérieur de la chaudière car ceci permet d'avoir un système mécaniquement plus simple et avec des transferts de fluides plus simple. Cela permet de concevoir une chaudière avec électrolyseur intégré dès sa conception/fabrication, et ainsi rapprocher au maximum les composants/fonctions d'un point de vue fluidique, mécanique, thermique, électronique, informatique... Cela permet en outre des gains en termes de compacité, de poids, de sécurité et de coûts de fabrication.

L'échangeur thermique 2a peut avantageusement être intégré à l'électrolyseur 2, voire même directement à la cellule d'électrolyse 2c. Afin de permettre un transfert thermique le plus optimal possible, il est avantageux de capter la chaleur dégagée au plus proche mécaniquement, fluidiquement et thermiquement, de la cellule 2c. Cela évite les pertes thermiques et/ou les contraintes fluidiques qui seraient induites pas un échangeur qui serait déporté à l'extérieur du l'électrolyseur 2 et pour lequel les calories devraient transiter via un fluide caloporteur. Une pompe seraient également nécessaire pour la circulation, induisant une consommation d'énergie supplémentaire. En intégrant l'échangeur thermique 2a dans l'électrolyseur 2 ou directement sur la cellule d'électrolyse 2c, l'efficience globale est améliorée (thermique, énergétique, mécanique, fluidique...). Cette configuration technique devient un avantage supplémentaire certain dans le cas où l'on souhaite intégrer l'électrolyseur 2 à l'intérieur de la chaudière.

Les gaz hydrogène H2 et/ou oxygène 02 sont quant à eux envoyés via le système d'injection 4 multivoies sur les entrées du brûleur 3 de la chaudière 1 afin d'améliorer la combustion de celle-ci.

Le régime d'hybridation, c'est-à-dire le ratio d'admission entre les gaz hydrogène H2 et/ou oxygène 02, et le combustible fossile C et/ou l'oxydant OX initial, peut avantageusement aller de 0% à 100%.

Typiquement, dans le gaz de ville, le mélange dans l'appareil à combustion 1 peut être enrichi avec de l'hydrogène H2 (de l'ordre de 6 à 20% en masse).

L'hybridation fournit un apport énergétique décarboné à la combustion fossile ainsi réalisée. Elle améliore notamment le bilan Carbone et environnemental (les flammes F du brûleur 3 de l'appareil de combustion 1 génèrent moins de NOx, CO2, CO...) et permet un rendement énergétique amélioré.

Notamment, l'oxygène 02 permet d'éviter la formation de NOx, tandis que l'hydrogène H2 permet d'optimiser la combustion des combustibles fossiles C.

On notera également que le système proposé permet ainsi de revaloriser l'oxygène 02 produit par l'électrolyseur 2 au lieu de relarguer dans l'atmosphère car il ne peut être stocké et/ou transporté simultanément avec l'hydrogène dans les réseaux de gaz de ville.

Le rendement global s'en trouve augmenté.

En combinaison, avec la cogénération réalisée par l'échangeur 2a, la récupération d'oxygène 02 permet d'augmenter le rendement global du procédé d'électrolyse et de combustion, le rendement thermique global de l'électrolyseur 2 pouvant atteindre jusqu'à 98%.

La production de gaz est en outre réalisée sur site, ce qui évite les problématiques d'acheminement et d'adaptation des réseaux de gaz.

Le système comporte en outre un module électronique 5 relié à l'électrolyseur 2, à l'appareil de combustion 1 et/ou à des capteurs 6x de l'installation qui sont présentés non exhaustivement sur la figure 1 car leur nombre et leurs types dépendent de l'appareil à combustion 1 à hybrider.

Les capteurs 6x sont typiquement des sondes thermiques, des débitmètres gaz, des capteurs de pression ou encore des débitmètres gaz/liquides. Ils sont par exemple situés sur les circuits dans lesquelles l'eau ou le fluide caloporteur circulent EC-EF-EP. Ou bien, ils peuvent être situés sur les circuits où les combustibles C et/ou oxydants OX circulent. Ces capteurs 6x peuvent aussi être internes à l'appareil à combustion 1 et/ou à l'électrolyseur 2.

Le module 5 pilote l'électrolyseur 2 et/ou l'admission des gaz hydrogène H2 et/ou oxygène 02 dans l'appareil à combustion 1. Ce module électronique 5 peut, ou non, être intégré dans l'électrolyseur 2, de façon associée ou non à son électronique 2b de contrôle.

Le pilotage qu'il réalise est fonction d'informations transmises par une électronique 1a que comporte l'appareil à combustion 1 et/ou par les capteurs 6x de l'installation.

Par exemple, le module 5 met en route l'électrolyseur 2 lorsque la mise en route de l'appareil à combustion 1 est détectée.

Il commande en outre l'admission de gaz hydrogène H2 et/ou oxygène 02 au niveau d'entrées d'admission 3a et 3b de l'appareil de combustion 1 tant que l'eau circulant dans le circuit EC-EF-EP n'a pas atteint une consigne de température donnée.

La détection de la mise en route de l'électrolyseur 2 se fait par exemple par détection d'appel du combustible C dans le système, typiquement :
- détection par la consommation de combustible C fossile au moyen d'un débitmètre gaz 6x ;
- détection par la consommation de combustible C fossile au moyen d'un capteur de pression 6x (typiquement par exemple, une consommation est détectée lors de la détection d'une dépression ou d'une pression inférieure à la pression de référence) ;
- détection de la commutation électrique de la vanne d'admission du combustible C fossile ;
- détection par une commande électronique établie par le module électronique 5 dialoguant entre l'électrolyseur 2 et l'appareil à combustion 1.

Plus généralement, le module 5 pilote les admissions de fluides C, OX, H2 et/ou 02 dans la chaudière 1 via le système d'injection 4 pour contrôler l'état de la combustion en cohérence avec la consommation de combustible C / oxydant OX.

Il est programmé en fonction du type de l'appareil à combustion 1 et du combustible C utilisé afin d'obtenir le rendement énergétique maximal en vue de consommer le moins de combustible C fossile possible.

Le système comporte en outre un système d'injection 4 des gaz H2 et/ou 02 issus de l'électrolyseur 2. Ce système d'injection 4 (typiquement constitué de pièces mécaniques et des composants fluidiques 4x tels que des mélangeurs, des clapets, des vannes de régulation - manuelles et/ou pilotées électroniquement - des électrovannes, des tubes de circulation et/ou de routage, des restrictions...) est connecté à au moins une entrée combustible 3a et/ou au moins une entrée oxydant 3b de l'appareil de combustion 1.

Ainsi, l'appareil de combustion 1 peut intégrer le système d'injection 4 définissant plusieurs voies d'injection des fluides permettant notamment de mélanger les gaz hydrogène H2 et/ou oxygène 02 soit dans le combustible C, soit dans l'oxydant OX. Le système d'injection 4 est connecté au brûleur 3 au moyen des raccordements d'injection 8a et 8b.

Par exemple, ces gaz peuvent être injectés dans le brûleur 3 de l'appareil à combustion 1, séparément ou simultanément, par l'admission d'air (oxydant OX).

Ils peuvent également être injectés dans le brûleur 3 de l'appareil à combustion 1, séparément ou simultanément, par l'entrée du gaz de ville (combustible C).

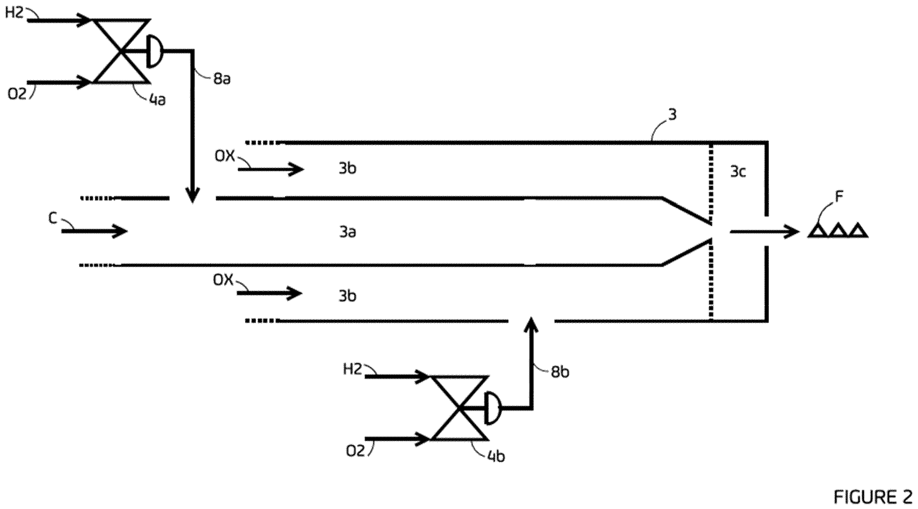

En variante encore, le mélange entre les gaz hydrogène, les gaz oxygène et le fluide combustible (ou oxydant) peut être réalisé à l'intérieur du système d'injection 4 lequel est configuré à cet effet. L'injection sur les entrées/admissions 3a et 3b intervient alors après mélange. Dans l'exemple sur la figure 2, deux entrées 3a et 3b permettent d'injecter les gaz hydrogène H2 et/ou oxygène 02 respectivement :
- entrée 3a : avec le méthane C (tuyau d'injection 8a) dans la chambre du brûleur 3 ;
- entrée 3b : avec l'air OX (injection 8b), directement au niveau de la flamme F du brûleur 3.

Des mélangeurs 4a et 4b sont prévus en amont de ces deux entrées 3a et 3b pour piloter les proportions d'hydrogène H2 et d'oxygène 02 envoyées sur chacune.

Cette possibilité d'injection sur les différentes entrées de l'appareil de combustion 1 permet de couvrir tous les modes d'admissions possibles des fluides C, OX, H2, 02 afin d'optimiser la combustion.

Pour un Pouvoir Calorifique Inférieur (PCI) déterminé, des volumes de combustibles différents sont nécessaires. Si l'on compare l'Hydrogène avec le Méthane ou bien les GPL (comme le Propane ou le Butane par exemple), il y a un facteur d'environ 3. C'est-à-dire qu'il faut, en volume, environ 3 fois plus d'Hydrogène pour obtenir un PCI identique. Cela veut dire que lorsqu'on injecte de l'Hydrogène (et/ou de l'oxygène) dans le combustible initial, on remplace une part de son volume initial et donc on retire une part de PCI initial. Pour compenser cet effet et ainsi améliorer l'efficience énergétique, les performances/rendements ou l'optimisation énergétique de l'installation, il est avantageux d'injecter l'hydrogène et/ou l'oxygène, également du côté de l'entrée d'oxydant du brûleur. En plus d'éviter une limitation du volume/PCI de combustible, cette possibilité d'admission (3b) permet aussi de couvrir une plus large gamme de paramétrages possibles, grâce à un double réglage (apport d'énergie côté combustible et/ou côté oxydant) et un pilotage plus fin de la combustion finale de 100% des entrants à savoir : l'hydrogène, l'oxygène, l'oxydant (généralement l'air ambiant) et le combustible initial.

Pour cela, les modes d'admission pilotés peuvent être tout ou rien ou bien proportionnels (0 à 100% d'hydrogène H2 et/ou d'oxygène 02, côté combustible C et/ou côté oxydant OX), ce qui permet d'injecter les fluides, individuellement ou collectivement, mélangés ou non, de façon complète ou partielle, par au moins l'une des entrées 3a et/ou 3b du brûleur 3 de l'appareil à combustion 1. Ceci permet un pilotage complet.

Le module électronique 5 peut régler le système d'injection 4 selon différentes phases de fonctionnement de l'appareil à combustion 1 et définir les flux gaz/liquide à injecter sur les différentes entrées 3a et/ou 3b de façon à admettre le « meilleur ratio combustible/oxydant » dans le brûleur 3 de l'appareil à combustion 1.

Notamment, il assure les fonctions suivantes :
- établissement de la demande par l'électronique 1a qui assure le retour-contrôle de la chaudière 1 ;
- pilotage de l'électrolyseur 2 pour donner les débits initiaux hydrogène H2 et/ou oxygène 02 ;
- réglage des ouvertures/débits sur des composants fluidiques 4x d'admission.

On notera en outre que le réglage du système d'injection 4 peut être réalisé soit électroniquement, soit manuellement afin de permettre de correctement s'adapter à chaque modèle d'appareil à combustion 1 et notamment à leurs régimes de fonctionnement et/ou à leurs modèles de brûleurs 3.

Également, le module électronique 5 comprend au moins un module de télécommunication 5a lui permettant d'échanger des données avec un serveur distant 7. La communication peut être par tout moyen : téléphonie mobile GSM, communications basse consommation de type RFID, SigFox, LoRa ou LTE-M, courants CPL vers un noeud de centralisation entre plusieurs habitations, etc...

Les données transférées vers le serveur 7 sont par exemple des données de fonctionnement de l'appareil à combustion 1, ceux de l'électrolyseur 2, ainsi que les données des capteurs 6x de l'installation ou encore du réglage des composants fluidiques 4x du système d'injection 4.

Le serveur 7 permet ainsi d'assurer entre autres les fonctions suivantes : surveillance, maintenance, stockage et analyse des données en provenance de différents types d'appareils à combustion 1.

L'optimisation énergétique d'une combustion fossile est permise par l'injection d'hydrogène et/ou d'oxygène (du côté combustible ou oxydant) ; ces gaz étants produits par un système d'électrolyse de l'eau (avec récupération de chaleur si possible via un échangeur ou à l'intérieur du système), et lesdits gaz étants mélangés par un système multivoies permettant d'en doser la composition (en particulier le ratio en volume de l'hydrogène, l'oxygène, l'oxydant (généralement l'air ambiant) et le combustible initial). Cette modification du combustible initial et de l'oxydant en entrée de brûleur a pour effet de substituer une partie du combustible fossile initial par une consommation d'électricité (électrons). Afin que cette substitution énergétique soit pertinente sur le plan environnemental, il apparaît alors évident de connecter une telle installation à des sources d'énergies électriques renouvelables offrant une énergie électrique produite en émettant une faible quantité de CO2.

Mais cela ne suffit pas, en effet si l'installation est connectée en permanence à des sources d'énergies électriques renouvelables, alors elle aura une plage de fonctionnement réduite. En particulier car les sources d'énergies électriques renouvelables ont des difficultés à fonctionner la nuit, sont intermittentes ou lors de l'absence de vent ou de soleil. De plus si l'installation est connectée en permanence au réseau électrique traditionnel, alors elle ne saura pas quand il est pertinent de fonctionner en s'assurant qu'elle consommera une énergie électrique moins impactante environnementalement par rapport au combustible fossile initial qu'elle substituera.

Une interaction avec le réseau de distribution électrique est donc avantageuse pour permettre au système d'optimisation énergétique de délivrer sa fonction environnementale à haute valeur ajoutée. Cette interaction peut être réalisé au moyen d'un système de télécommunication distant interfacé entre l'installation et le réseau de distribution électrique intelligent (« Smart-Grid électrique » en anglais) auquel elle est raccordée (électriquement). Cette télécommunication distante permet de rendre l'installation adaptable et ainsi lui permet de livrer une production d'eau chaude présentant une faible émission en CO2. De plus, l'installation peut alors être connectée, monitorée, et/ou pilotée par les opérateurs et/ou les régulateurs énergétiques (serveurs). D'une part, cela permettra de correctement choisir/tracer la source d'électricité utilisée au travers de différents mécanismes (blockchain, certificats d'énergie...), et d'autre part, de pouvoir commuter en temps réel d'une source d'énergie électrique à une autre en fonction de paramètres déterminés par le réseau électrique (signal piloté, heures creuses/pleines, heures bleues/vertes...). Il est aussi possible de commuter sur l'installation locale de production d'électricité pour l'autoconsommation. Dans un tel mode de réalisation où une centrale d'autoproduction électrique existerait à proximité de l'installation, le système de télécommunication et le serveur distant peuvent déterminer qu'il est mieux de commuter sur cette source d'électricité locale, et piloter cette commutation. Il sera ainsi possible de garantir à l'installation qu'elle sera alimentée par les électrons les plus compétitifs environnementalement et/ou économiquement (dans ce cas, produits localement et en dehors du réseau).

Par ailleurs, le système de télécommunication distant permet de réaliser avantageusement l'envoi au serveur de différents paramètres relatifs à la sécurité, au monitoring, à la consommations énergétiques, à la quantité d'énergie consommés par types de source d'électricité, économies en termes de dégagement de CO2 réalisées et calculées en temps réel. Il est aussi possible d'envoyer différents paramètres relatifs à la maintenance prédictive et curative, facturation de services énergétiques, certifications environnementales etc...).

Ainsi le réseau de distribution est de manière avantageuse apte à commander le démarrage et l'arrêt du dispositif de production 2 d'hydrogène et/ou d'oxygène et le serveur distant 7 est apte à transmettre des paramètres représentatifs du ratio d'hydrogène, d'oxygène et de fluide combustible à injecter sur l'entrée combustible 3a et aussi du ratio d'hydrogène, d'oxygène et de fluide oxydant à injecter sur l'entrée oxydant 3b.

Il est connu que l'énergie la moins chère et présentant le plus faible rejet de CO2 est celle produite par des sources d'énergies électriques renouvelables, qu'on transporte le moins loin et qu'on consomme le plus vite. L'installation permet de valoriser les situations dans lesquelles l'énergie dont la production a nécessité un faible dégagement de CO2 est utilisée en renfort ou en substitution d'une combustion fossile. Pour ce faire il est avantageux que l'installation puisse obtenir des informations relatives aux sources électriques à choisir, afin de pouvoir correctement optimiser énergétiquement et environnementalement la combustion fossile visée. L'installation permet ainsi une dépollution/réduction du C02 dégagé par le combustible initial via une consommation électrique directe qui soit plus compétitive (environnementalement et économiquement) que le stockage de cette énergie électrique. De plus les sources d'énergie présentant un faible dégagement de CO2 deviennent chaque année moins chers que les autres systèmes de production, une telle hybridation de la combustion fossile avec de l'énergie électrique en provenance de sources d'énergie présentant un faible dégagement de CO2, aura sa compétitivité qui augmentera dans le futur. Et il en va de même pour l'énergie électrique qui serait produite localement, en dehors du réseau, en autoproduction.

Comme on l'aura compris, le système proposé est facilement compatible avec des installations déjà existantes intégrant un ou plusieurs appareils à combustion 1 à brûleurs 3.

Il permet d'en optimiser le rendement énergétique grâce au vecteur hydrogène sans avoir besoin de modifier ou développer de nouvelles infrastructures de transport gaz.

Le calculateur de la chaudière possède les informations sur le paramétrage de la combustion. Afin de répondre le plus rapidement et le plus finement possible aux modifications des paramètres de cette combustion, l'installation peut avantageusement communiquer/dialoguer avec la chaudière afin de calculer, en temps réel, les meilleurs mélanges (hydrogène, oxygène, oxydant et combustible initial) à réaliser, ainsi que les ratios d'injections et les voies d'injection (oxydant et/ou combustible). Par ailleurs, un dialogue direct entre l'installation et la chaudière permet d'éviter l'utilisation de certains capteurs chers et au temps de réponses variables (débits-mètres par exemple). Cette interaction informatique directe permet également d'assurer plus de sécurité.

Dans l'exemple illustré sur la figure 1, l'électrolyseur 2 est couplé à une source d'alimentation électrique par énergie renouvelable ENR, en l'occurrence des panneaux photovoltaïques qui servent également à alimenter le réseau électrique du bâtiment BAT de l'installation.

Sur la figure 1, le système comporte également un système de stockage local S.H2 apte à stocker tout ou partie de l'hydrogène H2 généré en surplus par l'électrolyseur 2. Le système peut aussi comporter un système de stockage local S.02 apte à stocker tout ou partie de l'oxygène 02 généré en surplus par l'électrolyseur 2. Par local, on entend un stockage dans le bâtiment ou à proximité immédiate de celui-ci.

Le module électronique 5 pilote le système d'injection 4 afin le cas échéant d'alimenter ultérieurement, de façon désynchronisée à la production d'hydrogène et/ou d'oxygène H2, le bruleur 3 avec l'hydrogène et/ou l'oxygène ainsi stockés.

L'hydrogène H2 et/ou l'oxygène 02 en surplus ainsi stockés peuvent en outre être eux-mêmes être utilisés pour générer de l'énergie électrique (typiquement sur la figure 1, pile à combustible PAC recevant en entrée de l'hydrogène H2 stocké dans ledit système S.H2 et convertissant l'hydrogène en énergie électrique pour alimenter le réseau du bâtiment BAT).

### SYNTHESE DES MODES DE REALISATION ET DES FIGURES DECRITES CI-DESSUS

Le tableau ci-dessous reprend en synthèse les composants implémentés dans les modes de réalisation du système d'optimisation énergétique et environnementale d'une installation comprenant au moins un appareil à combustion, présentés en référence aux figures 1, 2, et 3 :

**[Table 1]**

| Repère | Elément/Composant | Figure 1 | Figure 2 | Figure 3 |
|---|---|---|---|---|
| 1 | Appareil à combustion | x | | x |
| 1a | Contrôle électronique de l'Appareil à combustion | x | | |
| 2 | Electrolyseur | x | | x |
| 2a | Echangeur thermique de l'électrolyseur | x | | |
| 2b | Contrôle électronique de l'électrolyseur | x | | |
| 2c | Cellule d'électrolyse | x | | |
| 3 | Brûleur | x | x | x |
| 3a | Entrée Combustible | x | x | x |
| 3b | Entrée Oxydant | x | x | x |
| 3c | Chambre du Brûleur | | x | |
| 4 | Système d'injection multivoies | x | | x |
| 4a | Mélangeurs sur entrée Combustible | | x | |
| 4b | Mélangeurs sur entrée Oxydant | | x | |
| 4x | Pièces mécaniques et composants fluidiques tels que mélangeurs, clapets, vannes de régulation, électrovannes, tubes de circulation et/ou de routage, restrictions... | x | | |
| 5 | Module électronique | x | | |
| 5a | Module électronique de communication | x | | |
| 6x | Capteurs des dispositifs et/ou de l'installation : sondes thermiques, débitmètres gaz, capteurs de pression, débitmètres gaz/liquides... | x | | |
| 7 | Serveur distant Ft base de données | x | | |
| 8a | Raccordements d'injection sur entrée Combustible | | x | |
| 8b | Raccordements d'injection sur entrée Oxydant | | x | |
| BAT | Bâtiment | x | | x |
| C | Arrivée Combustible | x | x | x |
| EC | Eau Chaude dans le circuit caloporteur | x | | x |
| EF | Eau Froide dans le circuit caloporteur | x | | x |
| EP | Eau Préchauffée dans le circuit caloporteur | x | | x |
| ENR | Source d'alimentation électrique à énergie renouvelable | x | | x |
| F | Flamme | x | x | |
| PAC | Pile A Combustible | x | | |
| OX | Arrivée Oxydant / Comburant | x | x | x |
| S. H2 | Stockage H2 | x | | x |
| S.02 | Stockage 02 | x | | x |

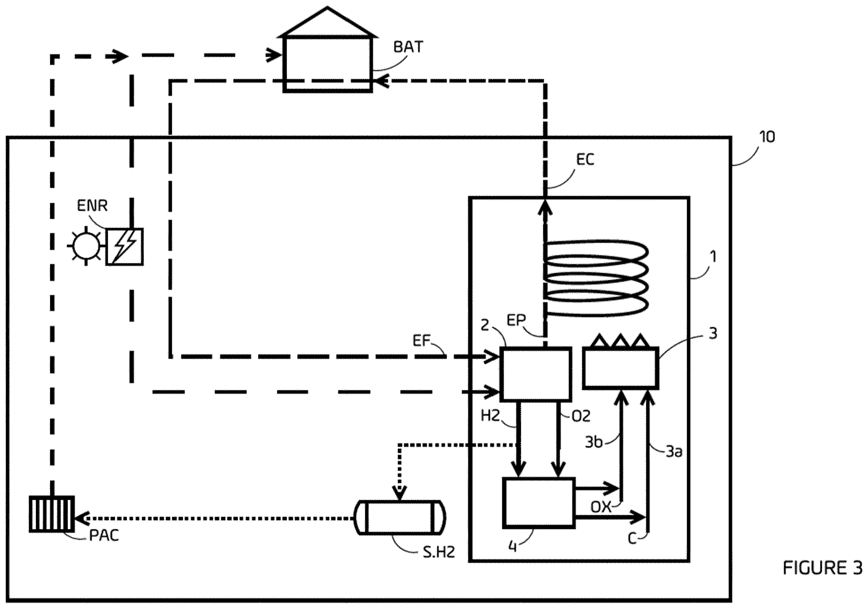

Dans une autre application particulièrement avantageuse, on a en outre représenté sur la figure 3 une installation comportant au moins un système d'optimisation énergétique et environnementale et dans lequel l'électrolyseur 2 et/ou le système d'injection 4 sont directement intégrés à l'appareil à combustion 3.

## Revendications

1. Ensemble comprenant :
- une installation comprenant au moins un appareil à combustion (1) comportant au moins un brûleur (3) comprenant au moins une entrée combustible (3a) et au moins une entrée oxydant (3b), et
- un système d'optimisation énergétique et environnementale de l'installation,
le système comprenant :
- au moins un dispositif de production (2) d'hydrogène et/ou d'oxygène par électrolyse de l'eau, et
- au moins un système d'injection (4) connecté à l'entrée combustible (3a) et /ou à l'entrée oxydant (3b) du brûleur (3),
le système étant apte :
- à injecter sur l'entrée combustible (3a) des gaz issus du dispositif de production (2) d'hydrogène et/ou d'oxygène, et/ou un mélange de ces gaz, ainsi que d'un fluide combustible, et/ou
- à injecter sur l'entrée oxydant (3b) des gaz issus du dispositif de production (2) d'hydrogène et/ou d'oxygène, et/ou un mélange de ces gaz, ainsi que d'un fluide oxydant,
le système comprenant au moins un module électronique (5) relié au dispositif de production (2) d'hydrogène et/ou d'oxygène, à l'appareil à combustion (1) et/ou à des capteurs (6x) équipant l'installation, le module électronique (5) pilotant le dispositif de production (2) et/ou le système d'injection (4) en fonction d'au moins une information provenant de l'appareil à combustion (1) et/ou des capteurs (6x) de l'installation ; le dispositif de production (2) d'hydrogène et/ou d'oxygène comportant un échangeur thermique (2a); **caractérisé en ce que** l'échangeur thermique (2a) permet de préchauffer l'eau (EP) qui est destinée à être ensuite chauffée (EC) par l'appareil à combustion (1).

2. Ensemble selon la revendication 1, dans lequel l'échangeur thermique (2a) permet de refroidir ledit dispositif de production (2) d'hydrogène et/ou d'oxygène.

3. Ensemble selon la revendication 1, dans lequel le système d'injection (4) comporte des composants fluidiques (4x) permettant de piloter, suivant différents modes, l'injection des gaz hydrogène et/ou oxygène sur l'entrée combustible (3a) du brûleur (3) de l'appareil à combustion (1) et/ou sur l'entrée oxydant (3b) du brûleur (3) de l'appareil à combustion (1).

4. Ensemble selon la revendication 3, dans lequel le module électronique (5) est adapté pour commander les différents modes d'injection pour injecter la totalité ou une partie des gaz hydrogène et/ou oxygène sur l'entrée combustible (3a) du brûleur (3) de l'appareil à combustion (1) et/ou la totalité ou une partie des gaz hydrogène et/ou oxygène sur l'entrée oxydant (3b) du brûleur (3) de l'appareil à combustion (1).

5. Ensemble selon l'une des revendications précédentes, dans lequel le système d'injection est adapté pour que le mélange des gaz hydrogène et/ou oxygène avec un fluide combustible ou un fluide oxydant soit réalisé à l'intérieur dudit système, avant injection sur au moins une entrée combustible et/ou oxydant de l'appareil à combustion.

6. Ensemble selon l'une des revendications précédentes, dans lequel le module électronique (5) comprend au moins un module (5a) de télécommunication permettant la transmission à un serveur distant (7) des données de l'appareil à combustion (1) et/ou du dispositif de production (2) d'hydrogène et/ou d'oxygène, des capteurs (6x) de l'installation et/ou du système d'injection (4).

7. Ensemble selon la revendication 6, qui comporte un serveur distant (7) qui mémorise et traite les données de fonctionnement reçues d'un ou plusieurs module(s) électronique(s) (5) pour générer des informations de maintenance.

8. Ensemble selon la revendication 6 ou 7 dans lequel le serveur distant (7) est apte à commander le démarrage du dispositif de production (2) d'hydrogène et/ou d'oxygène, et/ou le serveur distant (7) est apte à transmettre des paramètres représentatifs de ratios d'hydrogène et/ou d'oxygène et/ou de fluide combustible à injecter sur l'entrée combustible (3a) et/ou de ratios d'hydrogène et/ou d'oxygène et/ou de fluide oxydant à injecter sur l'entrée oxydant (3b).

9. Ensemble selon l'une des revendications précédentes, dans lequel le dispositif de production (2) d'hydrogène et/ou d'oxygène par électrolyse de l'eau est couplé à une source d'alimentation électrique à énergie renouvelable (ENR).

10. Ensemble selon l'une des revendications précédentes, qui comporte un système de stockage local (S.H2) et/ou un système de stockage local (S.02) aptes à stocker tout ou partie de l'hydrogène et/ou de l'oxygène générés en surplus par le dispositif de production (2) par électrolyse de l'eau, le module électronique (5) étant apte à piloter le système d'injection (4) afin d'alimenter ultérieurement, de façon désynchronisée à la production d'hydrogène et/ou d'oxygène, l'appareil à combustion (1) avec l'hydrogène et/ou l'oxygène ainsi stockés.

11. Ensemble selon la revendication 10, qui comporte une pile à combustible (PAC) recevant en entrée de l'hydrogène stocké dans ledit système de stockage local (S.H2) et convertissant l'hydrogène en énergie électrique.

12. Ensemble (11) selon l'une quelconque des revendications précédentes dans lequel le dispositif de production (2) d'hydrogène et/ou d'oxygène par électrolyse de l'eau et/ou le système d'injection (4) sont intégrés à l'appareil à combustion (1).

13. Ensemble (11) selon l'une quelconque des revendications précédentes dans lequel l'appareil à combustion (1) et le système d'injection (4) sont configurés pour l'échange de paramètres représentatifs de ratios d'hydrogène et/ou d'oxygène et/ou de fluide combustible à injecter sur l'entrée combustible (3a) et/ou de ratios d'hydrogène et/ou d'oxygène et/ou de fluide oxydant à injecter sur l'entrée oxydant (3b).

14. Utilisation d'un ensemble selon l'une des revendications précédentes dans le cas où l'appareil à combustion (1) est une chaudière.

## Patentansprüche

1. Anordnung, umfassend:
- eine Anlage, die mindestens eine Verbrennungseinrichtung (1) umfasst, die mindestens einen Brenner (3) umfasst, der mindestens einen Brennstoffeinlass (3a) und mindestens einen Oxidationsmitteleinlass (3b) umfasst, und
- ein System zur Energie- und Umweltoptimierung der Anlage,
wobei das System umfasst:
- mindestens eine Vorrichtung (2) zur Produktion von Wasserstoff und/oder Sauerstoff durch Elektrolyse von Wasser, und
- mindestens ein Einspritzsystem (4), das mit dem Brennstoffeinlass (3a) und/oder mit dem Oxidationsmitteleinlass (3b) des Brenners (3) verbunden ist,
wobei das System in der Lage ist:
- am Brennstoffeinlass (3a) Gase aus der Wasserstoff- und/oder Sauerstoff-Produktionsvorrichtung (2) und/oder eine Mischung dieser Gase sowie eines Brennstofffluids einzuspritzen, und/oder
- am Oxidationsmitteleinlass (3b) Gase aus der Wasserstoff- und/oder Sauerstoff-Produktionsvorrichtung (2) und/oder eine Mischung dieser Gase sowie eines Oxidationsmittelfluids einzuspritzen,
wobei das System mindestens ein Elektronikmodul (5) umfasst, das mit der Wasserstoff- und/oder Sauerstoff-Produktionsvorrichtung (2), mit der Verbrennungseinrichtung (1) und/oder mit Sensoren (6x), mit denen die Anlage ausgerüstet ist, verbunden ist, wobei das Elektronikmodul (5) die Produktionsvorrichtung (2) und/oder das Einspritzsystem (4) in Abhängigkeit von mindestens einer Information steuert, die von der Verbrennungseinrichtung (1) und/oder den Sensoren (6x) der Anlage stammt;
wobei die Wasserstoff- und/oder Sauerstoff-Produktionsvorrichtung (2) einen Wärmetauscher (2a) umfasst;
**dadurch gekennzeichnet, dass** der Wärmetauscher (2a) es ermöglicht, Wasser vorzuerhitzen (EP), das dazu bestimmt ist, anschließend von der Verbrennungseinrichtung (1) erhitzt (EC) zu werden.

2. Anordnung nach Anspruch 1, wobei der Wärmetauscher (2a) es ermöglicht, die Wasserstoff- und/oder Sauerstoff-Produktionsvorrichtung (2) zu kühlen.

3. Anordnung nach Anspruch 1, wobei das Einspritzsystem (4) Fluidikkomponenten (4x) umfasst, die es ermöglichen, die Einspritzung der Wasserstoff- und/oder Sauerstoffgase am Brennstoffeinlass (3a) des Brenners (3) der Verbrennungseinrichtung (1) und/oder am Oxidationsmitteleinlass (3b) des Brenners (3) der Verbrennungseinrichtung (1) nach unterschiedlichen Modi zu steuern.

4. Anordnung nach Anspruch 3, wobei das Elektronikmodul (5) dazu geeignet ist, die unterschiedlichen Einspritzmodi zu steuern, um die Gesamtheit oder einen Teil der Wasserstoff- und/oder Sauerstoffgase am Brennstoffeinlass (3a) des Brenners (3) der Verbrennungsvorrichtung (1) und/oder die Gesamtheit oder einen Teil der Wasserstoff- und/oder Sauerstoffgase am Oxidationsmitteleinlass (3b) des Brenners (3) der Verbrennungsvorrichtung (1) einzuspritzen.

5. Anordnung nach einem der vorstehenden Ansprüche, wobei das Einspritzsystem dafür geeignet ist, dass die Mischung der Wasserstoff- und/oder Sauerstoffgase mit einem Brennstofffluid oder einem Oxidationsmittelfluid innerhalb des Systems vor Einspritzung an mindestens einem Brennstoff- und/oder Oxidationsmitteleinlass der Verbrennungseinrichtung ausgeführt wird.

6. Anordnung nach einem der vorstehenden Ansprüche, wobei das Elektronikmodul (5) mindestens ein Telekommunikationsmodul (5a) umfasst, das die Übertragung der Daten der Verbrennungseinrichtung (1) und/oder der Wasserstoff- und/oder Sauerstoff-Produktionsvorrichtung (2), der Sensoren (6x) der Anlage und/oder des Einspritzsystems (4) an einen Remote-Server (7) ermöglicht.

7. Anordnung nach Anspruch 6, die einen Remote-Server (7) umfasst, der die von einem oder mehreren Elektronikmodul(en) (5) empfangenen Betriebsdaten speichert und verarbeitet, um Wartungsinformationen zu erzeugen.

8. Anordnung nach Anspruch 6 oder 7, wobei der Remote-Server (7) in der Lage ist, den Start der Wasserstoff- und/oder Sauerstoff-Produktionsvorrichtung (2) zu steuern, und/oder der Remote-Server (7) in der Lage ist, Parameter zu übertragen, die für Wasserstoff- und/oder Sauerstoff- und/oder Brennstofffluid-Verhältnisse, die am Brennstoffeinlass (3a) eingespritzt werden sollen, und/oder Wasserstoff- und/oder Sauerstoff- und/oder Oxidationsmittelfluid-Verhältnisse, die am Oxidationsmitteleinlass (3b) eingespritzt werden sollen, repräsentativ sind.

9. Anordnung nach einem der vorstehenden Ansprüche, wobei die Vorrichtung (2) zur Produktion von Wasserstoff und/oder Sauerstoff durch Elektrolyse von Wasser mit einer Quelle für die elektrische Speisung mit erneuerbarer Energie (EE) gekoppelt ist.

10. Anordnung nach einem der vorstehenden Ansprüche, die ein lokales Speichersystem (S.H2) und/oder ein lokales Speichersystem (S.O2) umfasst, die in der Lage sind, den gesamten oder einen Teil des von der Produktionsvorrichtung (2) durch Elektrolyse von Wasser im Überschuss erzeugten Wasserstoffs und/oder Sauerstoffs zu speichern, wobei das Elektronikmodul (5) in der Lage ist, das Einspritzsystem (4) zu steuern, um später von der Wasserstoff- und/oder Sauerstoffproduktion desynchronisiert die Verbrennungseinrichtung (1) mit dem so gespeicherten Wasserstoff und/oder Sauerstoff zu speisen.

11. Anordnung nach Anspruch 10, die eine Brennstoffzelle (BZ) umfasst, die am Einlass Wasserstoff empfängt, der im lokalen Speichersystem (S.H2) gespeichert ist, und den Wasserstoff in elektrische Energie umwandelt.

12. Anordnung (11) nach einem der vorstehenden Ansprüche, wobei die Vorrichtung (2) zur Produktion von Wasserstoff und/oder Sauerstoff durch Elektrolyse von Wasser und/oder das Einspritzsystem (4) in die Verbrennungseinrichtung (1) integriert sind.

13. Anordnung (11) nach einem der vorstehenden Ansprüche, wobei die Verbrennungseinrichtung (1) und das Einspritzsystem (4) für den Austausch von Parametern konfiguriert sind, die für Wasserstoff- und/oder Sauerstoff- und/oder Brennstofffluid-Verhältnisse, die am Brennstoffeinlass (3a) eingespritzt werden sollen, und/oder Wasserstoff- und/oder Sauerstoff- und/oder Oxidationsmittelfluid-Verhältnisse, die am Oxidationsmitteleinlass (3b) eingespritzt werden sollen, repräsentativ sind.

14. Verwendung einer Anordnung nach einem der vorstehenden Ansprüche in dem Fall, in dem es sich bei der Verbrennungseinrichtung (1) um einen Heizkessel handelt.

## Claims

1. Assembly comprising :
- an installation comprising at least one combustion appliance (1) having at least one burner (3) comprising at least one fuel inlet (3a) and at least one oxidizer inlet (3b), and
- a system for optimizing the installation energy and environmental performance, the system comprising :
- at least one device (2) for producing hydrogen and/or oxygen by electrolysis of water, and
- at least one injection system (4) connected to the fuel inlet (3a) and/or oxidant inlet (3b) of the burner (3),
the system being able to :
- injecting gases from the device (2) for producing hydrogen and/or oxygen, and/or a mixture of these gases together with a combustible fluid into the fuel inlet (3a), and/or
- injecting gases from the hydrogen and/or oxygen production device (2), and/or a mixture of these gases together with an oxidizing fluid into the oxidizer inlet (3b), the system comprising at least one electronic module (5) connected to the hydrogen and/or oxygen production device (2), to the combustion appliance (1) and/or to sensors (6x) in the installation, the electronic module (5) controlling the production device (2) and/or the injection system (4) as a function of at least one information from the combustion appliance (1) and/or from the sensors (6x) in the plant;
the device (2) for producing hydrogen and/or oxygen comprising a heat exchanger (2a);
**characterized in that** the heat exchanger (2a) makes it possible to preheat the water (EP) which is intended to be subsequently heated (EC) by the combustion appliance (1).

2. Assembly according to claim 1, in which the heat exchanger (2a) enables said hydrogen and/or oxygen production device (2) to be cooled.

3. Assembly according to claim 1, in which the injection system (4) comprises fluidic components (4x) for controlling, in different modes, the injection of the hydrogen and/or oxygen gases to the fuel inlet (3a) of the burner (3) of the combustion appliance (1) and/or to the oxidant inlet (3b) of the burner (3) of the combustion appliance (1).

4. Assembly according to claim 3, wherein the electronic module (5) is adapted to control the different injection modes to inject all or part of the hydrogen and/or oxygen gases on the fuel inlet (3a) of the burner (3) of the combustion appliance (1) and/or all or part of the hydrogen and/or oxygen gases on the oxidant inlet (3b) of the burner (3) of the combustion appliance (1).

5. Assembly according to one of the preceding claims, in which the injection system is adapted so that the mixing of the hydrogen and/or oxygen gases with a combustible fluid or an oxidizing fluid is carried out within said system, prior to injection on at least one combustible and/or oxidizing inlet of the combustion appliance.

6. Assembly according to one of the preceding claims, in which the electronic module (5) comprises at least one telecommunication module (5a) enabling the transmission to a remote server (7) of data from the combustion appliance (1) and/or from the hydrogen and/or oxygen production device (2), from the sensors (6x) of the installation and/or from the injection system (4).

7. Assembly according to claim 6, which includes a remote server (7) that stores and processes the operating data received from one or more electronic modules (5) to generate maintenance information.

8. Assembly according to claim 6 or 7 in which the remote server (7) is able to control the start-up of the hydrogen and/or oxygen production device (2), and/or the remote server (7) is able to transmit parameters representative of ratios of hydrogen and/or oxygen and/or fuel fluid to be injected on the fuel inlet (3a) and/or ratios of hydrogen and/or oxygen and/or oxidizing fluid to be injected on the oxidizing inlet (3b).

9. Assembly according to one of the preceding claims, in which the device (2) for producing hydrogen and/or oxygen by electrolysis of water is coupled to a renewable energy (RE) electrical power supply.

10. Assembly according to one of the preceding claims, which comprises a local storage system (S.H2) and/or a local storage system (S.O2) capable of storing all or part of the hydrogen and/or oxygen generated in surplus by the water electrolysis production device (2), the electronic module (5) being capable of controlling the injection system (4) in order to subsequently supply the combustion appliance (1) with the hydrogen and/or oxygen thus stored, out of phase with the hydrogen and/or oxygen production.

11. Assembly according to claim 10, which comprises a fuel cell (PAC) receiving as input hydrogen stored in said local storage system (S.H2) and converting the hydrogen into electrical energy.

12. Assembly (11) according to any of the preceding claims in which the device (2) for producing hydrogen and/or oxygen by electrolysis of water and/or the injection system (4) are integrated into the combustion appliance (1).

13. Assembly (11) according to any one of the preceding claims wherein the combustion appliance (1) and the injection system (4) are configured for the exchange of parameters representative of ratios of hydrogen and/or oxygen and/or combustible fluid to be injected on the combustible inlet (3a) and/or ratios of hydrogen and/or oxygen and/or oxidizing fluid to be injected on the oxidizing inlet (3b).

14. Use of an assembly according to one of the preceding claims where the combustion appliance (1) is a boiler.
